# EUROPÄISCHE PATENTSCHRIFT

(11) **EP 3 929 532 B1**
(45) Veröffentlichungstag und Bekanntmachung des Hinweises auf die Patenterteilung: **03.01.2024**
(21) Anmeldenummer: 21180107.1
(22) Anmeldetag: 17.06.2021
(51) Int. Cl.: G01B 11/25

(54) **VORRICHTUNG ZUM BESTIMMEN EINES HÖHENPROFILS EINES OBJEKTS**
DEVICE FOR DETERMINING A HEIGHT PROFILE OF AN OBJECT
DISPOSITIF DE DÉTERMINATION D'UN PROFIL DE HAUTEUR D'UN OBJET

(30) Priorität: 26.06.2020 DE 102020003850
(43) Veröffentlichungstag der Anmeldung: 29.12.2021
(73) Patentinhaber: Baumer Inspection GmbH, 78467 Konstanz (DE)
(72) Erfinder: Diehl, Hans-Peter, 78464 Konstanz (DE); Hoch, Dr. Sebastian, 78462 Konstanz (DE); Villing, Wolfgang, 78467 Konstanz (DE)
(74) Vertreter: Strauss, Steffen

(56) Entgegenhaltungen:
- WO-A1-2016/131047
- DE-A1- 3 926 349
- GB-A- 1 517 571
- US-A1- 2017 102 231
- US-B1- 6 449 036

## Beschreibung

Die Erfindung betrifft eine Vorrichtung zum Bestimmen eines Höhenprofils eines Objekts, insbesondere eine Vorrichtung zum Bestimmen eines Höhenprofils einer dreidimensionalen Oberfläche eines Objekts, und ein entsprechendes Verfahren.

Verfahren zum Erkennen eines Höhenprofils eines Objekts basieren beispielsweise auf der Erfassung und Auswertung von Licht, welches von der Oberfläche des Objekts reflektiert wird.

Die Druckschrift DE 39 26 349 A1 offenbarte eine optische Fehlerinspektionsvorrichtung für die Erkennung von in einem vorzugsweise ebenen transparenten Platten- oder Blattmaterial endlicher Dicke vorhandenen Fehlstellen.

Die WO 2016/131047 A1 offenbart ein Scan-System für ein Objekt mit einer Lichtquelle zum Erzeugen von Licht und Spiegeln zum Umlenken des erzeugten Lichts auf das Objekt und auf eine Erfassungseinheit, um aus der Intensität des reflektierten Lichts Oberflächeneigenschaften des Objekts zu bestimmen.

Die US 2017/102231 A1 offenbart ein Scan-System für ein Objekt mit einer Lichtquelle zum Erzeugen von Licht und mit Spiegeln zum Umlenken des erzeugten Lichts auf das Objekt und auf eine Erfassungseinheit, um aus der Intensität des reflektierten Lichts Oberflächeneigenschaften des Objekts zu bestimmen.

Die GB 1 517 571 A offenbart eine Erfassungseinrichtung für ein Objekt mit einer durch einen Laser ausgebildeten Lichtquelle und einem ersten und einem zweiten Hohlspiegel.

Die US 6 449 036 B1 offenbart eine Erfassungseinrichtung mit einer durch einen Punktlaser ausgebildeten Lichtquelle und mit einem Hohlspiegel, der in Interaktion zu einem drehbaren Polygonspiegelrad steht.

Nachteilig bei den sonstigen bekannten Vorrichtungen und Verfahren zum Bestimmen eines Höhenprofils ist, dass aufgrund der Divergenz des emittierten und erfassten Lichts im Bereich von Vertiefungen einer Oberfläche eines Objekts oftmals nur eine nachteilige, bzw. unpräzise, Erfassung eines Höhenprofils des Objekts erreicht wird.

Ebenfalls nachteilig bei den bekannten Vorrichtungen und Verfahren ist, dass die Oberfläche eines Objekts oftmals lediglich punktuell erfasst werden kann, beispielsweise im Rahmen einer Fehlererkennung, und es oftmals nicht möglich ist das Höhenprofil der dreidimensionalen Oberfläche des Objekts vollständig zu erfassen, also das Höhenprofil der gesamten dreidimensionalen Oberfläche des Objekts zu erfassen.

Es ist eine Aufgabe der Erfindung, ein verbessertes Konzept zum Bestimmen eines Höhenprofils einer dreidimensionalen Oberfläche eines Objekts bereitzustellen.

Die Aufgabe wird gemäß einem ersten Aspekt gelöst durch eine Vorrichtung gemäß Anspruch 1 zum Bestimmen eines Höhenprofils einer dreidimensionalen Oberfläche eines Objekts, umfassend, eine Lichtquelle, welche ausgebildet ist, Licht mit divergenten Lichtstrahlen zu emittieren, wobei das Licht von der dreidimensionalen Oberfläche des Objekts reflektiert wird, eine Erfassungseinrichtung, die eine Triangulationskamera mit einem zweidimensionalen Matrix-Chip mit einer Vielzahl von Pixeln umfasst, welche ausgebildet ist, das von der dreidimensionalen Oberfläche des Objekts reflektierte Licht als ein versetztes/verformtes Lichtmuster zu erfassen, einen ersten Hohlspiegel, welcher ausgebildet ist, das von der Lichtquelle emittierte Licht mit divergenten Lichtstrahlen in Richtung der dreidimensionalen Oberfläche des Objekts zu reflektieren und das Licht mit divergenten Lichtstrahlen in Licht mit parallelen Lichtstrahlen zu wandeln, und einen zweiten Hohlspiegel, welcher ausgebildet ist, das von der dreidimensionalen Oberfläche des Objekts reflektierte Licht, auf die Erfassungseinrichtung zu fokussieren, und eine Auswerteeinrichtung, welche ausgebildet ist, auf Basis des durch die Erfassungseinrichtung erfassten versetzten/verformten Lichtmusters ein Höhenprofil der dreidimensionalen Oberfläche des Objekts zu bestimmen. Der Einfachheit halber wird im folgenden Text von parallelen Lichtstrahlen gesprochen. Wobei damit auch möglichst oder weitgehend parallele Lichtstahlen gemeint sind. Auf Grund der unterschiedlichen Formgebung des Hohlspiegels bzw. nur der Annäherung an eine optimale Form, sind die Lichtstrahlen nicht an jeder Stelle streng parallel.

Dadurch wird der technische Vorteil erreicht, dass eine besonders wirksame und vorteilhafte Bestimmung des Höhenprofils der dreidimensionalen Oberfläche des Objekts sichergestellt wird.

Die Lichtquelle der Vorrichtung emittiert hierbei Licht mit divergenten Lichtstrahlen, insbesondere Lichtstrahlen, welche von der Lichtquelle in Richtung der dreidimensionalen Oberfläche des Objekts emittiert wird, wobei das Licht von der dreidimensionalen Oberfläche des Objekts reflektiert wird.

Das von der dreidimensionalen Oberfläche des Objekts reflektierte Licht wird durch die Erfassungseinrichtung, eine Triangulationskamera, als ein versetztes Lichtmuster erfasst.

Die dreidimensionale Oberfläche des Objekts, insbesondere eine Platte, weist hierbei ein Höhenprofil auf, welches beispielsweise Vertiefungen, insbesondere Bohrungen, und/oder Erhöhungen umfassen kann. An den Vertiefungen der dreidimensionalen Oberfläche des Objekts wird das auftreffende Licht im Vergleich zu den ebenen Bereichen der dreidimensionalen Oberfläche des Objekts unterschiedlich verformt, so dass durch die Erfassungseinrichtung, eine Triangulationskamera, ein versetztes/verformtes Lichtmuster erfasst wird.

Insbesondere umfasst die Lichtquelle einen Laser, insbesondere einen Linienlaser, welcher ausgebildet ist, divergentes Laserlicht zu emittieren, insbesondere eine Laserlinie auf die dreidimensionale Oberfläche des Objekts zu projizieren. Das divergente Laserlicht, insbesondere die Laserlinie, wird von der dreidimensionalen Oberfläche des Objekts reflektiert und die Erfassungseinrichtung, die Triangulationskamera, erfasst eine versetztes/verformtes Laserlichtmuster, insbesondere eine verformte Laserlinie.

Die Auswerteeinrichtung der Vorrichtung ist ausgebildet, auf Basis des durch die Erfassungseinrichtung erfassten versetzten/verformten Lichtmusters, insbesondere des versetzten/verformten Laserlichtmusters, insbesondere der verformten Laserlinie, das Höhenprofil der dreidimensionalen Oberfläche des Objekts zu bestimmen.

Die Verwendung der Hohlspiegel in der Vorrichtung ermöglicht, dass je nach strahlungstechnischer Anordnung des jeweiligen Hohlspiegels in dem Strahlungsweg vor dem Objekt, bzw. nach dem Objekt, das von der Lichtquelle emittierte Licht mit divergenten Lichtstrahlen durch Reflexion an dem Hohlspiegel in Licht mit parallelen Lichtstrahlen gewandelt werden kann, bzw. das von der dreidimensionalen Oberfläche des Objekts reflektierte Licht mit parallelen Lichtstrahlen in Licht mit konvergenten Lichtstrahlen gewandelt werden kann, welches auf die Erfassungseinrichtung fokussiert wird.

Ist der Hohlspiegel entlang des Strahlungswegs des von der Lichtquelle emittierten Lichts zwischen der Lichtquelle und dem Objekt angeordnet, wird das von der Lichtquelle emittierte Licht mit divergenten Lichtstrahlen durch den Hohlspiegel in Licht mit parallelen Lichtstrahlen gewandelt und in Richtung der dreidimensionalen Oberfläche des Objekts reflektiert.

Ist der Hohlspiegel entlang des Strahlungswegs des von der Lichtquelle emittierten Lichts zwischen dem Objekt und der Erfassungseinrichtung angeordnet, wird das von Oberfläche reflektierte Licht mit parallelen Lichtstrahlen durch den Hohlspiegel in Licht mit konvergenten Lichtstrahlen gewandelt, und auf die Erfassungseinrichtung fokussiert.

Da die Oberfläche des Objekts als eine dreidimensionale Oberfläche ausgebildet ist, welche somit Erhöhungen und Vertiefungen aufweist, wird das der dreidimensionalen Oberfläche des Objekts zugeführte Licht im Bereich der Erhöhungen und Vertiefungen unterschiedlich von der Oberfläche reflektiert als beispielsweise außerhalb der Erhöhungen und Vertiefungen, z.B. auf einer ebenen Oberfläche der Platte.

Dadurch erfasst die Erfassungseinrichtung ein versetztes/verformtes Lichtmuster, insbesondere eine verformte Laserlinie, wobei der Versatz des versetzten Lichtmusters, bzw. die Verformung der verformten Laserlinie, mit dem Höhenprofil der dreidimensionalen Oberfläche des Objekts korreliert ist.

Somit kann die Auswerteeinrichtung auf Basis des durch die Erfassungseinrichtung erfassten versetzten Lichtmusters, insbesondere der Verformung der Laserlinie, ein Höhenprofil der dreidimensionalen Oberfläche des Objekts einfach und vorteilhaft und insbesondere auch automatisiert erfassen.

Ein Hohlspiegel ist ausgebildet, das von der Lichtquelle emittierte Licht mit divergenten Lichtstrahlen in Licht mit parallelen Lichtstrahlen zu wandeln und in Richtung der dreidimensionalen Oberfläche des Objekts zu reflektieren.

Diese Ausführung bietet den technischen Vorteil, dass eine Umwandlung des von der Lichtquelle emittierten divergenten Lichts in Licht mit parallelen Lichtstrahlen durch den zumindest einen Hohlspiegel eine besonders präzise Reflexion des Lichts von der dreidimensionalen Oberfläche des Objekts ermöglicht, bei der insbesondere Störungen reduziert sind. Hierbei ist der zumindest eine Hohlspiegel entlang des Strahlungswegs des Lichts zwischen der Lichtquelle und dem Objekt angeordnet.

Ferner ist ein Hohlspiegel ausgebildet, das von der dreidimensionalen Oberfläche des Objekts reflektierte Licht mit parallelen Lichtstrahlen in Licht mit konvergenten Lichtstrahlen zu wandeln und auf die Erfassungseinrichtung zu fokussieren.

Diese Ausführung bietet den technischen Vorteil, dass eine vorteilhafte Erfassung des reflektierten Lichts durch die Erfassungseinrichtung ermöglicht wird, wenn der Hohlspiegel entlang des Strahlungswegs des Lichts zwischen dem Objekt und der Erfassungseinrichtung angeordnet ist.

Ein erster Hohlspiegel ist somit ausgebildet, das von der Lichtquelle emittierte Licht mit divergenten Lichtstrahlen in Licht mit parallelen Lichtstrahlen zu wandeln und in Richtung der dreidimensionalen Oberfläche des Objekts zu reflektieren.

Weiter ist ein zweiter Hohlspiegel ausgebildet, das von der dreidimensionalen Oberfläche des Objekts reflektierte Licht mit parallelen Lichtstrahlen in Licht mit konvergenten Lichtstrahlen zu wandeln und auf die Erfassungseinrichtung zu fokussieren.

Dies bietet den technischen Vorteil, dass das durch den ersten Hohlspiegel gewandelte Licht mit den parallelen Lichtstrahlen eine besonders präzise und Störungs-reduzierte Reflexion des Lichts von der dreidimensionalen Oberfläche des Objekts ermöglicht, und dass das durch den zweiten Hohlspiegel gewandelte Licht vorteilhaft auf die Erfassungseinrichtung fokussiert werden kann.

In einer beispielhaften Ausführungsform ist der zumindest eine Hohlspiegel als ein konkav gekrümmter Hohlspiegel geformt.

Diese Ausführung bietet den technischen Vorteil, dass durch die konkave Krümmung der Oberseite des Hohlspiegels je nach Positionierung des Hohlspiegels in dem Strahlengang zwischen Lichtquelle und Erfassungseinrichtung entweder eine wirksame Wandlung von Licht mit divergenten Lichtstrahlen in Licht mit parallelen Lichtstrahlen ermöglich wird, bzw. eine Wandlung von Licht mit parallelen Lichtstrahlen in Licht mit konvergenten Lichtstrahlen ermöglicht wird.

In einer beispielhaften Ausführungsform ist die gekrümmte Oberseite des zumindest einen konkav gekrümmten Hohlspiegels als ein Ausschnitt eines Rotationsparaboloids geformt oder die rotationsparabolische Form der gekrümmten Oberseite des konkav gekrümmten Hohlspiegels wird durch einen Ausschnitt einer Kugelfläche angenähert.

In einer weiteren beispielhaften Ausführungsform ist die gekrümmte Oberseite des zumindest einen konkav gekrümmten Hohlspiegels als ein Ausschnitt einer Parabolrinne geformt oder in weiterer Vereinfachung wird die zugrundeliegende Parabel der Parabolrinne durch ein Kreissegment angenähert. Was dann zu einem Ausschnitt einer kreisförmigen Rinne führt.

In einer weiteren beispielhaften Ausführungsform weist der zumindest eine Hohlspiegel eine quaderförmige Form auf, wobei die konkav gekrümmte Oberseite des Hohlspiegels in einer Oberseite des Quaders gebildet ist.

Der streifenförmige Ausschnitt bietet den technischen Vorteil, dass der Hohlspiegel besonders bei einer sich hauptsächlich in einer Richtung erstreckenden Laserlinie ausreichend ist, um eine wirksame Reflexion des Lichts sicherzustellen. Dieser Fakt gilt sowohl für den Hohlspiegel auf der Beleuchtungsseite, als auch auf der Seite der Erfassungseinrichtung.

In einer beispielhaften Ausführungsform ist das Objekt gegenüber der Lichtquelle und/oder der Erfassungseinrichtung verlagerbar, insbesondere rotierbar und/oder verschiebbar, um das Höhenprofil der dreidimensionalen Oberfläche des Objekts zu bestimmen. Alternativ kann aber auch die Lichtquelle und/oder die Erfassungseinrichtung gegenüber dem Objekt verlagerbar, insbesondere rotierbar und/oder verschiebbar angeordnet sein, um das Höhenprofil der dreidimensionalen Oberfläche des Objekts zu bestimmen.

Diese Ausführung bietet den technischen Vorteil, dass durch die Verlagerung des Objekts gegenüber der Vorrichtung, bzw. durch die Verlagerung der Vorrichtung gegenüber dem Objekt der Auftreffpunkt des Lichts, insbesondere der Laserlinie, auf der dreidimensionalen Oberfläche des Objekts ebenfalls verlagert wird, so dass ein kontinuierliches Abtasten der dreidimensionalen Oberfläche des Objekts ermöglicht wird. Somit kann ein vollständiges Höhenprofil der gesamten dreidimensionalen Oberfläche des Objekts bestimmt werden.

Gemäß der Erfindung umfasst die Erfassungseinrichtung eine Triangulationskamera mit einem zweidimensionalen Matrix-Chip mit einer Vielzahl von Pixeln, wobei die Triangulationskamera ausgebildet ist, einen ersten Bereich des Lichtmusters und zumindest einen gegenüber dem ersten Bereich um einen Versatz versetzten weiteren Bereich des Lichtmusters zu erfassen, wobei die Auswerteeinrichtung ausgebildet ist, auf Basis des erfassten Versatzes der einzelnen Bereiche des Lichtmusters ein Höhenprofil, insbesondere zweidimensionales Höhenprofil, der dreidimensionalen Oberfläche des Objekts zu bestimmen.

Ist die Lichtquelle insbesondere als ein Laser, insbesondere als ein Linienlaser, ausgebildet, entspricht das durch die Triangulationskamera erfasste versetzte Lichtmuster einer verformten Laserlinie mit unterschiedlich verformten Bereichen, wobei die Auswerteeinrichtung ausgebildet ist, auf Basis der verformten Bereiche, bzw. auf Basis der Verformung der einzelnen Bereiche der Laserlinie ein Höhenprofil, insbesondere zweidimensionales Höhenprofil, der dreidimensionalen Oberfläche des Objekts zu bestimmen.

Diese erfindungsgemäße Ausführung bietet den technischen Vorteil, dass durch die Verwendung einer Triangulationskamera mit einem zweidimensionalen Matrix-Chip mit einer Vielzahl von Pixel, anhand der Aktivierung der einzelnen Pixel der Versatz des versetzten Lichtmusters, bzw. die Verformung der verformten Laserlinie, vorteilhaft und automatisiert erfasst werden kann. Somit kann die Auswerteeinrichtung insbesondere bei einem Verlagern des Objekts gegenüber der Vorrichtung durch ein kontinuierliches Abtasten von einzelnen zweidimensionalen Höhenprofilen der Oberfläche das vollständige Höhenprofil der dreidimensionalen Oberfläche des Objekts bestimmen.

Die Aufgabe wird gemäß einem zweiten Aspekt gelöst durch ein Verfahren nach Anspruch 11 zum Bestimmen eines Höhenprofils einer dreidimensionalen Oberfläche eines Objekts, umfassend die folgenden Verfahrensschritte:
- Bereitstellen eines Objekts mit einer dreidimensionalen Oberfläche;
- Emittierung divergenter Lichtstrahlen von einer Lichtquelle;
- Wandlung des von der Lichtquelle emittierte Licht mit divergenten Lichtstrahlen in Licht mit parallelen Lichtstrahlen durch einen ersten Hohlspiegel, um dieses in Richtung der dreidimensionalen Oberfläche des Objekts zu reflektieren;
- Wandlung des von der dreidimensionalen Oberfläche des Objekts reflektierten Lichts mit parallelen Lichtstrahlen in Licht mit konvergenten Lichtstrahlen und Fokussierung auf eine Erfassungseinrichtung, die eine Triangulationskamera mit einem zweidimensionalen Matrix-Chip mit einer Vielzahl von Pixeln umfasst, durch einen zweiten Hohlspiegel
- Erfassung eines versetzten / verformten Lichtmuster von der Erfassungseinrichtung;
- Bestimmung eines Höhenprofils der dreidimensionalen Oberfläche des Objekts auf Basis des durch die Erfassungseinrichtung erfassten versetzten Lichtmusters oder der erfassten Verformung einzelner Bereiche des Lichtmusters.

Das Objekt mit der dreidimensionalen Oberfläche kann eine Möbelplatte mit Vertiefungen sein.

Mit den vorstehenden Verfahrensschritten kann eine wirksame und automatisierte Erfassung des Höhenprofils der dreidimensionalen Oberfläche des Objekts sichergestellt werden. Insbesondere können Bohrungen oder Vertiefungen einer Möbelplatte unter Anwendung dieser Verfahrensschritte für eine Qualitätskontrolle präzise erfasst und dargestellt werden.

In einem weiteren vorteilhaften Verfahrensschritt kann die Lichtquelle einen Linienlaser umfassen, der divergentes Laserlicht emittiert und insbesondere eine Laserlinie auf die dreidimensionale Oberfläche des Objekts projiziert.

Hierbei kann die Erfassungseinrichtung ein versetztes / verformtes Laserlichtmuster, insbesondere eine verformte Laserlinie, welche von der dreidimensionalen Oberfläche des Objekts reflektiert wird, erfassen.

Die Auswerteeinrichtung kann den Versatz oder die Verformung der Laserlinie bzw. des Laserlichtmusters anhand unterschiedlicher Helligkeitswerte einzelner Pixel des zweidimensionalen Matrix-Chips der Triangulationskamera im Anschluss auswerten.

Die in Bezug auf die Vorrichtung gemäß dem ersten Aspekt genannten beispielhaften Ausführungen sind ebenso beispielhafte Ausführungen für das Verfahren gemäß dem zweiten Aspekt.

Ausführungsbeispiele der Erfindung sind in den Zeichnungen dargestellt und werden im Folgenden näher beschrieben.

Es zeigen:
- Fig. 1: eine perspektivische Darstellung einer Vorrichtung zum Bestimmen eines Höhenprofils einer dreidimensionalen Oberfläche eines Objekts gemäß einem Ausführungsbeispiel;
- Fig. 2A-2C: Darstellungen der Vorrichtung gemäß Fig. 1 in unterschiedlichen Perspektiven;
- Fig. 3A: eine schematische Darstellung eines durch eine Erfassungseinrichtung erfassten versetzten Lichtmusters;
- Fig. 3B: eine schematische Darstellung eines durch eine Auswerteeinrichtung bestimmten Höhenprofils einer dreidimensionalen Oberfläche eines Objekts;
- Fig. 4: eine perspektivische Darstellung einer Lichtquelle, der Lichtstrahlen und eines Hohlspiegels der Vorrichtung gemäß Fig. 1;
- Fig. 5A-5B: perspektivische Darstellungen von Lichtstrahlen, welche von Hohlspiegeln reflektiert werden gemäß alternativen Vorrichtungen;
- Fig. 6: eine perspektivische Darstellung eines Hohlspiegels der Vorrichtung gemäß Fig. 1; und
- Fig. 7: eine schematische Darstellung eines Verfahrens zum Erfassen einer dreidimensionalen Oberfläche eines Objekts gemäß einem Ausführungsbeispiel.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln.

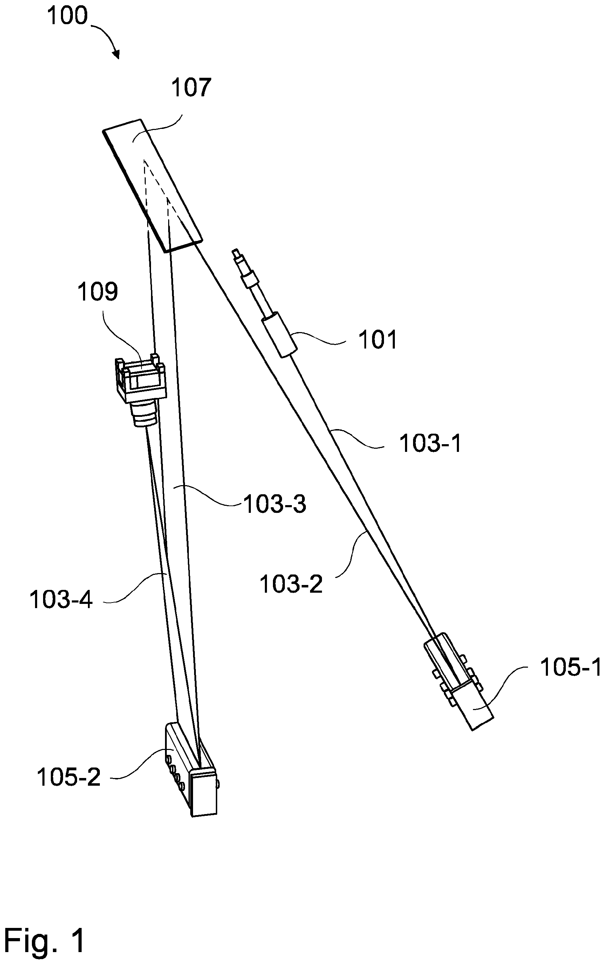

Fig. 1 zeigt eine schematische Darstellung einer Vorrichtung zum Bestimmen eines Höhenprofils einer dreidimensionalen Oberfläche eines Objekts gemäß einem Ausführungsbeispiel.

Die Vorrichtung 100 umfasst eine Lichtquelle 101, insbesondere einen Linienlaser, welcher ausgebildet ist, Licht mit divergenten Lichtstrahlen 103-1 zu emittieren. Das von der Lichtquelle 101, insbesondere dem Linienlaser, emittierte Licht 103-1 ist dadurch gekennzeichnet, dass das Licht 103-1 von der Lichtquelle 101 mit nicht parallelen Lichtstrahlen weg, also mit divergenten Lichtstrahlen, emittiert wird. Somit trifft das von der Lichtquelle 101, insbesondere dem Linienlaser, emittierte Licht 103-1 auf den ersten Hohlspiegel 105-1 der Vorrichtung 100 nicht in einem Punkt, sondern in einem Bereich, insbesondere entlang einer Laserlinie, auf.

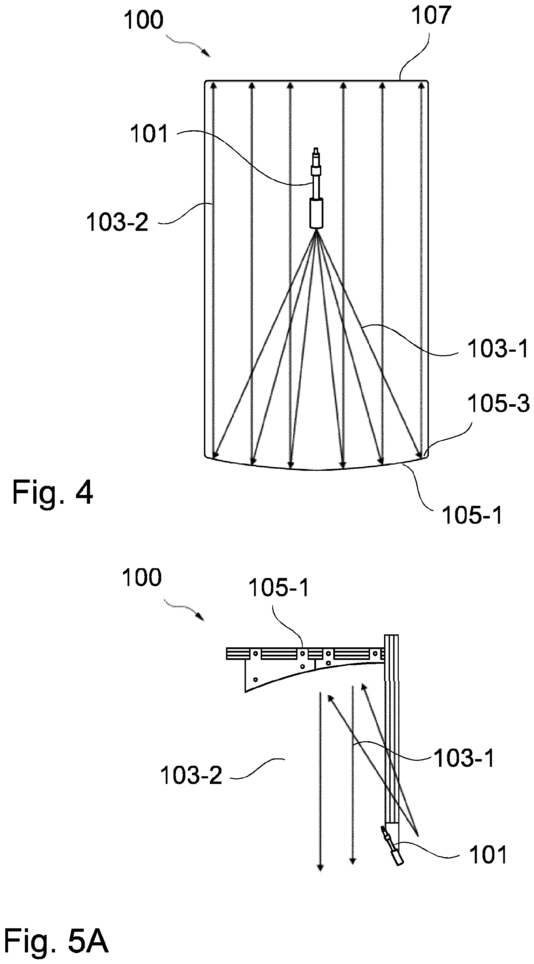

Der erste Hohlspiegel 105-1 weist eine konkav gekrümmte Oberseite 105-3 (siehe Fig. 4) auf und ist ausgebildet, das von der Lichtquelle 101 emittierte Licht mit divergenten Lichtstrahlen 103-1 in Richtung einer dreidimensionalen Oberfläche eines Objekts 107 zu reflektieren und in Licht 103-2 mit parallelen Lichtstrahlen zu wandeln. Für weitere Details hierzu wird auf die Fig. 4 verwiesen.

Das Licht 103-2 mit den parallelen Lichtstrahlen trifft auf die dreidimensionale Oberfläche des Objekts 107. Ist die Lichtquelle 101 ein Linienlaser wird insbesondere eine Laserlinie auf die dreidimensionale Oberfläche des Objekts 107 projiziert. Das Licht 103-2 mit den parallelen Lichtstrahlen wird von der dreidimensionalen Oberfläche des Objekts 107, insbesondere von Erhöhungen und Vertiefungen, der dreidimensionalen Oberfläche des Objekts 107 als reflektiertes Licht 103-3 reflektiert.

Die Vorrichtung 100 umfasst ferner einen zweiten Hohlspiegel 105-2, welcher ausgebildet ist, das von der dreidimensionalen Oberfläche des Objekts 107 reflektierte Licht 103-3 mit parallelen Lichtstrahlen in Licht mit konvergenten Lichtstrahlen 103-4 zu wandeln und auf die Erfassungseinrichtung 109 der Vorrichtung 100 zu fokussieren.

Die Erfassungseinrichtung 109 umfasst eine Triangulationskamera, welche ausgebildet ist, das von der dreidimensionalen Oberfläche des Objekts 107 reflektierte und durch den zweiten Hohlspiegel 105-2 fokussierte Licht 103-3, 103-4 als ein versetztes Lichtmuster, insbesondere als eine verformte Laserlinie, zu erfassen.

Der entsprechende Versatz des durch die Erfassungseinrichtung 109 erfassten versetzten Lichtmusters, bzw. die Verformung der durch die Erfassungseinrichtung 109 erfassten verformten Laserlinie, beruht hierbei auf unterschiedlichen Reflexionen des Lichts 103-2 an entsprechenden Erhöhungen und Vertiefungen der dreidimensionalen Oberfläche des Objekts 107. In anderen Worten ausgedrückt kann durch den entsprechenden Versatz des durch die Erfassungseinrichtung 109 erfassten versetzten Lichtmusters, bzw. die Verformung der durch die Erfassungseinrichtung 109 erfassten verformten Laserlinie, ein Rückschluss auf das Höhenprofil der dreidimensionalen Oberfläche des Objekts 107 gezogen werden.

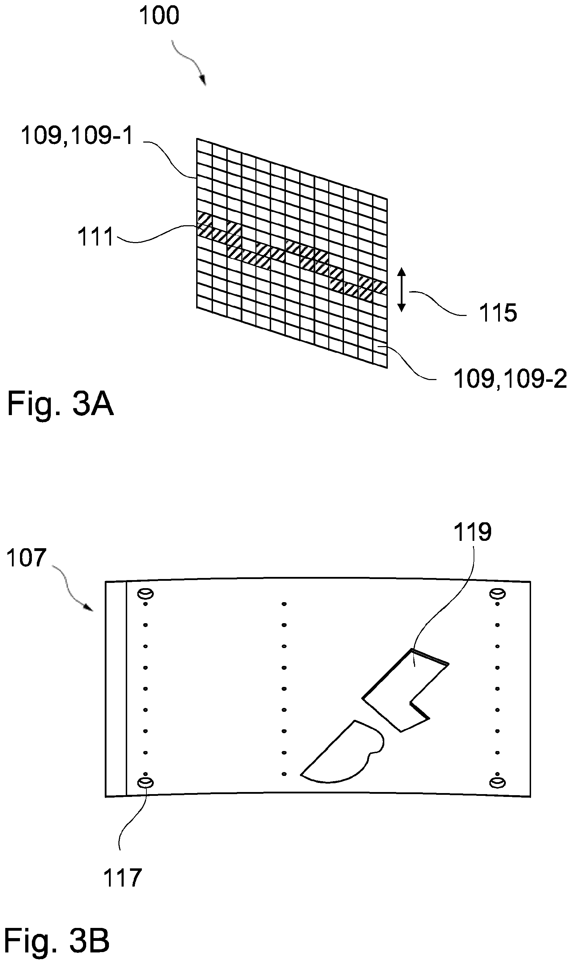

Hierbei ist die Erfassungseinrichtung 109 als eine Triangulationskamera mit einem zweidimensionalen Matrix-Chip mit einer Vielzahl von Pixeln ausgebildet. Anhand der Auswertung der einzelnen Pixel des Matrix-Chips kann in einzelnen Bereichen des versetzten Lichtmusters, insbesondere der verformten Laserlinie, der Versatz des Lichtmusters, bzw. die Verformung der Laserlinie, vorteilhaft erfasst werden. Für eine visuelle Darstellung eines entsprechend durch eine Erfassungseinrichtung 109 erfassten versetzten Lichtmusters, bzw. einer verformten Laserlinie, wird auf die nachfolgende Fig. 3A verwiesen.

Die Vorrichtung 100 umfasst ferner eine in Fig. 1 nicht gezeigte Auswerteeinrichtung, welche ausgebildet ist, auf Basis des durch die Erfassungseinrichtung 109 erfassten versetzten Lichtmusters, insbesondere der Verformung der Laserlinie, ein Höhenprofil der dreidimensionalen Oberfläche des Objekts 107 zu bestimmen.

Hierbei ist die Auswerteeinrichtung ausgebildet, auf Basis des erfassten Versatzes, insbesondere Verformung, der einzelnen Bereichen des Lichtmusters, insbesondere Laserlinie, ein Höhenprofil, insbesondere zweidimensionales Höhenprofil, der dreidimensionalen Oberfläche des Objekts 107 zu bestimmen. Für weitere Details hierzu wird auf die Fig. 3B verwiesen.

Somit kann die Vorrichtung 100 eine dreidimensionale Höhenprofilmessung des Objektes 107 in einer Schnittebene bereitstellen. Hierbei registriert die Erfassungseinrichtung 109 den Lateralversatz und die Verformung einer in einem Triangulationswinkel auf die dreidimensionale Oberfläche des Objekts 107 projizierten Laserlinie.

Das durch die Erfassungseinrichtung 109, die Triangulationskamera, erfasste

Bild enthält die Höheninformationen der dreidimensionalen Oberfläche des Objekts 107 entlang der durch den Laserstrahl definierten Schnittebene.

Zur vollständigen Ermittlung des dreidimensionalen Höhenprofils der Oberfläche des Objekts 107 wird hierbei insbesondere das Objekt 107 in einer scannenden Bewegung unter der Vorrichtung 100 durchgeführt. Somit ist das Objekt 107 gegenüber der Lichtquelle 101 und der Erfassungseinrichtung 109 verlagerbar, insbesondere rotierbar und/oder verschiebbar.

Durch die Verlagerung des Objekts 107 gegenüber der Vorrichtung 100 bewegt sich somit der Auftreffpunkt des auf das Objekt 107 treffenden Lichts 103-2, insbesondere Laserlinie, so dass eine Vielzahl von zweidimensionalen Höhenprofilen erhalten werden, welche zu einem gesamten Höhenprofil der dreidimensionalen Oberfläche des Objekts 107 durch die Auswerteeinrichtung kombiniert werden können.

Hierbei bestimmt die Auswerteeinrichtung das Höhenprofil der dreidimensionalen Oberfläche des Objekts 107 aus der Abweichung der verformten Laserlinie von der Nulllage. Die Auswerteeinrichtung wertet hierbei die Verschiebung von einzelnen Pixeln eines Matrix-Chips der Erfassungseinrichtung 109, die Triangulationskamera, aus.

Hierbei werden insbesondere der Messbereich und die Messauflösung durch den Triangulationswinkel zwischen der optischen Achse der Optik der Erfassungseinrichtung 109 und der Ebene, der von der Oberfläche des Objekts 107 reflektieren Lichts 103-3 bestimmt. Je streifender das Licht 103-2 auf die Objektebene fällt, umso größer ist der bei einer Höhenänderung der dreidimensionalen Oberfläche des Objekts 107 durch die Erfassungseinrichtung 109 beobachtete Lateralversatz des versetzten Lichtmusters, insbesondere der verformten Laserlinie.

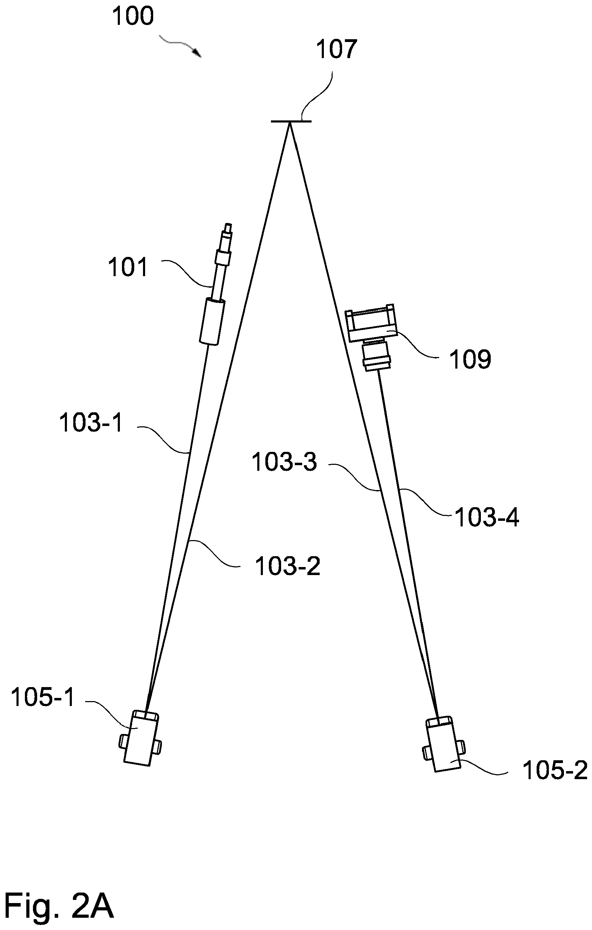

Die Figuren 2A bis 2C zeigen schematische Darstellungen der Vorrichtung gemäß Fig. 1 in unterschiedlichen Perspektiven.

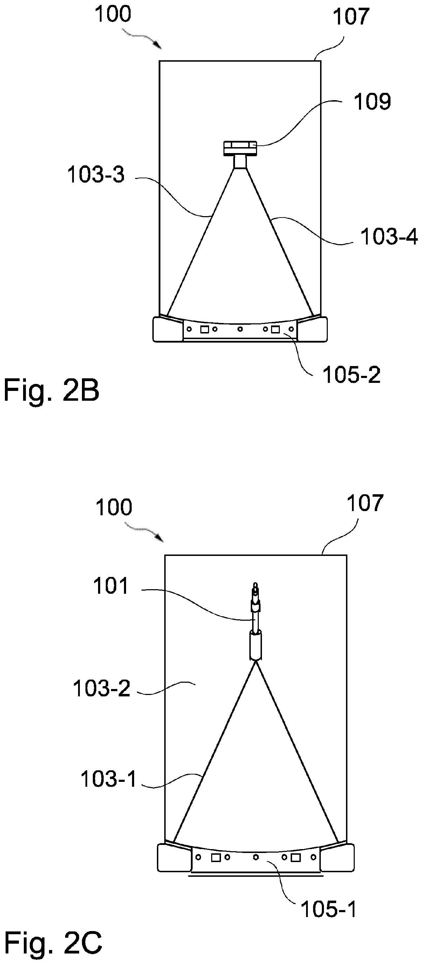

In der Fig. 2A ist die Vorrichtung 100 in einer seitlichen Ansicht gezeigt. In der Fig. 2B ist die Vorrichtung 100 in einer Hinteransicht gezeigt. In der Fig. 2C ist die Vorrichtung 100 in einer Vorderansicht gezeigt.

Für weitere Details wird auf die umfangreichen Ausführungen zur Fig. 1 verwiesen.

Fig. 3A zeigt eine schematische Darstellung eines durch eine Erfassungseinrichtung erfassten versetzten Lichtmusters.

In der Fig. 3A ist ein Matrix-Chip 109-1 der Erfassungseinrichtung 109, die Triangulationskamera, mit einer Vielzahl von Pixeln 109-2 schematisch dargestellt. Das auf den Matrix-Chip 109-1, bzw. auf die einzelnen Pixel 109-2 auftreffende von der dreidimensionalen Oberfläche des Objekts 107 reflektierte Licht 103-3, 103-4 wird durch den Matrix-Chip 109-1 als ein versetztes Lichtmuster 111, insbesondere verformten Laserlinie, erfasst.

Hierbei zeichnet sich das versetzte Lichtmuster 111, insbesondere durch eine Verformung der Laserlinie aus. Der Versatz 115 des versetzten Lichtmusters 111, insbesondere der durch die Oberfläche verformten Laserlinie, ist dargestellt.

Das in Fig. 3A dargestellte versetzte Lichtmuster 111, insbesondere verformte Laserlinie, kann durch eine Auswerteeinrichtung in ein zweidimensionales Höhenprofil der dreidimensionalen Oberfläche des Objekts 107 umgewandelt werden. Um das vollständige Höhenprofil der dreidimensionalen Oberfläche des Objekts 107 zu erhalten, wird das Objekt 107 gegenüber der Vorrichtung 100 verfahren, so dass eine Vielzahl von zweidimensionalen Höhenprofilen der dreidimensionalen Oberfläche des Objekts 107 erhalten wird, aus welchen das vollständige Höhenprofil der dreidimensionalen Oberfläche des Objekts 107 kombiniert wird.

Fig. 3B zeigt eine schematische Darstellung eines durch eine Auswerteeinrichtung bestimmten Höhenprofils einer dreidimensionalen Oberfläche eines Objekts.

Wie aus der Fig. 3B ersichtlich ist, kann das vollständige Höhenprofil der dreidimensionalen Oberfläche eines Objekts 107, hier eine Möbelplatte, anhand der Konturen des Objekts 107 dargestellt werden. Das Objekts 107 beinhaltet Bohrungen 117. In der Mitte des Objekts 107 sind Erhöhungen und Vertiefungen 119 dargestellt.

Fig. 4 zeigt eine perspektivische Darstellung einer Lichtquelle und eines Hohlspiegels der Vorrichtung gemäß Fig. 1.

Die Lichtquelle 101, insbesondere Laser, der Vorrichtung 100 emittiert Licht 103-1, welches von der Lichtquelle 101 mit nicht parallelen Lichtstrahlen weg, also mit divergenten Lichtstrahlen, emittiert wird.

Der erste Hohlspiegel 105-1 ist ausgebildet, das von der Lichtquelle 101 emittierte Licht mit divergenten Lichtstrahlen 103-1 in Richtung einer dreidimensionalen Oberfläche eines Objekts 107 zu reflektieren und in Form von Licht, insbesondere Laserlinie, mit parallelen Lichtstrahlen 103-2 zu wandeln.

Die Figuren 5A bis 5B zeigen perspektivische Darstellungen von Lichtstrahlen, welche von Hohlspiegeln reflektiert werden, gemäß alternativen Vorrichtungen.

In der in Fig. 5A gezeigten Darstellung ist eine alternative Vorrichtung 100 umfasst, in welcher die dargestellte Lichtquelle 101, insbesondere Laser und der konkave Hohlspiegel 105-1 so angeordnet ist, dass nur ein sogenannter "off-Axis" Anteil des Hohlspiegels 105-1 verwendet wird.

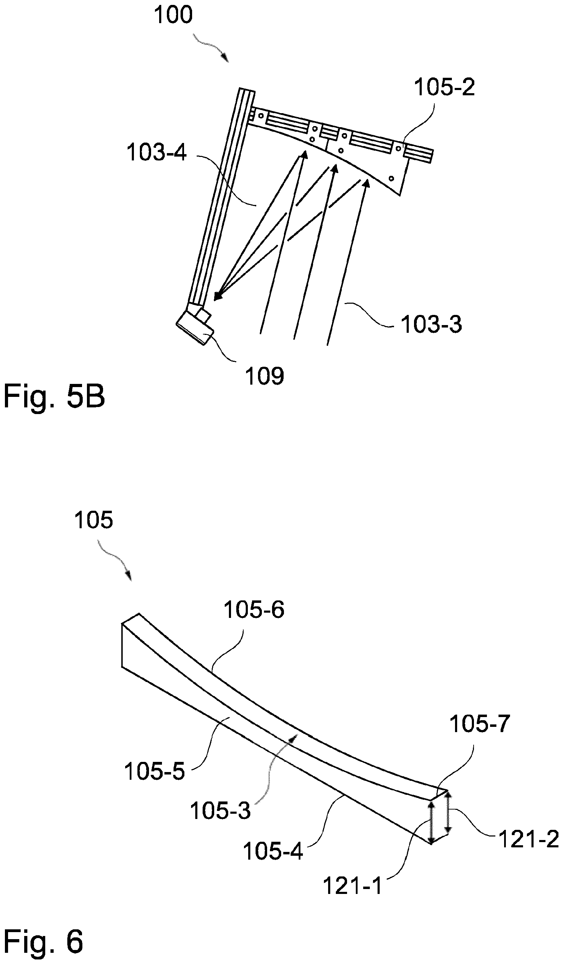

In der in Fig. 5B gezeigten Darstellung ist eine alternative Vorrichtung 100 umfasst, in welcher die dargestellte Erfassungseinheit 109, und der konkave Hohlspiegel 105-2 so angeordnet ist, dass nur ein sogenannter "off-Axis" Anteil des Hohlspiegels 105-2 verwendet wird.

Fig. 6 zeigt eine perspektivische Darstellung eines Hohlspiegels der Vorrichtung gemäß Fig. 1.

Der in Fig. 6 dargestellte Hohlspiegel 105 weist eine quaderförmige Form mit einer konkav gekrümmten Oberseite 105-3 auf, welche in der Oberseite des Quaders gebildet ist. Hierbei ist insbesondere die konkav gekrümmten Oberseite 105-3 insbesondere als eine nichtsymmetrisch gekrümmte Oberseite 105-3 geformt.

Diese hier vorliegende, nichtsymmetrisch gekrümmte Oberseite 105-3 entsteht dadurch, da der gewählte Ausschnitt eines Rotationsparaboloids nicht symmetrisch zur Rotationsachse des Rotationsparaboloids ausgeschnitten wurde.

Dies wird insbesondere durch einen Vergleich der ersten Randspiegelhöhe 121-1 und der zweiten Randspiegelhöhe 121-1 deutlich.

Die erste Randspiegelhöhe 121-1 erstreckt sich an dem lateralen Rand 105-7 des Hohlspiegels 105, an der Vorderseite 105-5 des Hohlspiegels 105 von der Unterseite 105-4 des Hohlspiegels 105 zu der konkav gekrümmten Oberseite 105-3.

Die zweite Randspiegelhöhe 121-2 erstreckt sich an dem lateralen Rand 105-7 des Hohlspiegels 105, an der Rückseite 105-6 des Hohlspiegels 105 von der Unterseite 105-4 des Hohlspiegels 105 zu der konkav gekrümmten Oberseite 105-3.

Auch wenn dies aus den in der Fig. 6 dargestellten Längenverhältnissen der ersten und zweiten Randspiegelhöhe 121-1, 121-2 nicht ersichtlich ist, unterscheiden sich die erste und zweite Randspiegelhöhe 121-1, 121-2 zumindest minimal voneinander.

Durch eine entsprechende nicht symmetrische konkav gekrümmten Oberseite 105-3 des Hohlspiegels 105 wird ein besonders vorteilhaftes Reflexionsverhalten des Hohlspiegels 105 sichergestellt.

Auch wenn dies in der Fig. 6 nicht dargestellt ist, kann die konkav gekrümmte Oberseite 105-3 des Hohlspiegels 105 gemäß einer Alternative des Hohlspiegels 105 auch symmetrisch ausgebildet sein, d.h. ein anderer Ausschnitt des Rotationsparaboloids.

Auch wenn dies in der Fig. 6 nicht dargestellt ist, kann die konkav gekrümmte Oberseite 105-3 des Hohlspiegels 105 gemäß einer Alternative des Hohlspiegels 105 auch ein Ausschnitt aus einer Kugelfläche sein, die möglichst gut an die Form den Rotations-Paraboloiden angenähert ist.

Auch wenn dies in der Fig. 6 nicht dargestellt ist, kann die konkav gekrümmte Oberseite 105-3 des Hohlspiegels 105 gemäß einer Alternative des Hohlspiegels 105 auch eine parabolisch geformte Fläche sein, auch Parabolrinne genannt.

Auch wenn dies in der Fig. 6 nicht dargestellt ist, kann die konkav gekrümmte Oberseite 105-3 des Hohlspiegels 105 gemäß einer Alternative des Hohlspiegels 105 auch eine kreisförmig geformte Fläche sein, auch Kreisrinne genannt, die möglichst gut an die Form der Parabolrinne angenähert ist.

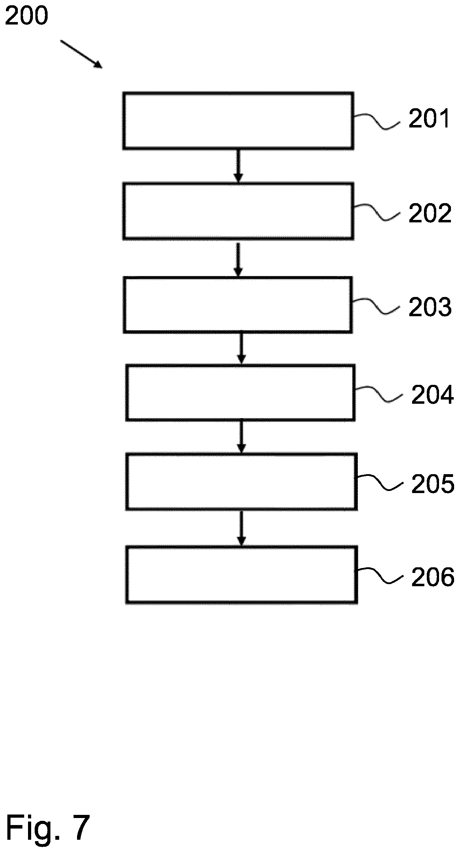

Fig. 7 zeigt eine schematische Darstellung eines Verfahrens zum Bestimmen eines Höhenprofils einer dreidimensionalen Oberfläche eines Objekts.

Das Verfahren 200 umfasst die folgenden Verfahrensschritte.

Der erste Verfahrensschritt umfasst das Bereitstellen 201 einer Vorrichtung 100, wie sie beispielsweise in der Fig. 1 dargestellt ist.

Der zweite Verfahrensschritt umfasst das Bereitstellen 202 eines Objekts 107, insbesondere einer Möbelplatte mit Vertiefungen, mit einer dreidimensionalen Oberfläche.

Der dritte Verfahrensschritt umfasst das Emittieren 203 von divergenten Lichtstrahlen 103-1 durch die Lichtquelle 101 in Richtung der dreidimensionalen Oberfläche des Objekts 107.

Der vierte Verfahrensschritt umfasst das Wandeln 204 der Vergenz der Lichtausbreitung mit zumindest einen Hohlspiegel 105, 105-1, 105-2.

Der fünfte Verfahrensschritt umfasst das Erfassen 205 des von der dreidimensionalen Oberfläche des Objekts 107 reflektierten Lichts 103-3 als versetztes Lichtmuster 111 durch die Erfassungseinrichtung 109, die eine Triangulationskamera mit einem zweidimensionalen Matrix-Chip mit einer Vielzahl von Pixeln umfasst.

Der sechste Verfahrensschritt umfasst das Bestimmen 206 eines Höhenprofils der dreidimensionalen Oberfläche des Objekts 107 auf Basis des durch die Erfassungseinrichtung 109 erfassten versetzten Lichtmusters 111 durch die Auswerteeinrichtung.

## Patentansprüche

1. Vorrichtung (100) zum Bestimmen eines Höhenprofils einer dreidimensionalen Oberfläche eines Objekts (107), umfassend:
eine Lichtquelle (101), welche ausgebildet ist, divergente Lichtstrahlen (103-1) zu emittieren,
ein erster Hohlspiegel (105, 105-1), welcher ausgebildet ist, das von der Lichtquelle (101) emittierte divergente Licht (103-1) in Licht (103-2) mit parallelen Lichtstrahlen zu wandeln und in Richtung der dreidimensionalen Oberfläche des Objekts (107) zu reflektieren,
ein zweiter Hohlspiegel (105, 105-2), welcher ausgebildet ist, das von der dreidimensionalen Oberfläche des Objekts (107) reflektierte Licht (103-3) in Licht mit konvergenten Lichtstrahlen (103-4) zu wandeln und die konvergenten Lichtstrahlen (103-4) auf eine Erfassungseinrichtung (109) zu fokussieren,
wobei die Erfassungseinrichtung (109) ausgebildet ist, das von der dreidimensionalen Oberfläche des Objekts (107) reflektierte Licht (103-3) als ein versetztes / verformtes Lichtmuster (111) zu erfassen, wobei der Versatz des versetzten Lichtmusters mit dem Höhenprofil der dreidimensionalen Oberfläche des Objekts (107) korreliert, und eine Auswerteeinrichtung, welche ausgebildet ist, auf Basis des durch die Erfassungseinrichtung (109) erfassten versetzten Lichtmusters (111) ein Höhenprofil der dreidimensionalen Oberfläche des Objekts (107) zu bestimmen,
wobei die Erfassungseinrichtung (109) eine Triangulationskamera mit einem zweidimensionalen Matrix-Chip mit einer Vielzahl von Pixeln umfasst, wobei die Triangulationskamera ausgebildet ist, die Verformung (115) des Lichtmusters (111) zu erfassen,
wobei die Auswerteeinrichtung ausgebildet ist, auf Basis des erfassten Versatzes / der erfassten Verformung einzelner Bereiche des Lichtmusters (111) ein Höhenprofil, insbesondere zweidimensionales Höhenprofil, der dreidimensionalen Oberfläche des Objekts (107) zu bestimmen.

2. Vorrichtung (100) nach Anspruch 1, wobei die Hohlspiegel (105, 105-1, 105-2) als konkav gekrümmte Hohlspiegel (105, 105-1, 105-2) geformt sind.

3. Vorrichtung (100) nach Anspruch 2, wobei die gekrümmte Oberseite (105-3) der konkav gekrümmten Hohlspiegel (105, 105-1, 105-2) als ein Ausschnitt eines Rotationsparaboloids geformt sind oder eine rotationsparabolische Form der gekrümmten Oberseite (105-3) der konkav gekrümmten Hohlspiegel (105, 105-1, 105-2) durch einen Ausschnitt eines Kugelsegments angenähert wird.

4. Vorrichtung (100) nach Anspruch 2, wobei die gekrümmte Oberseite (105-3) der konkav gekrümmten Hohlspiegel (105, 105-1, 105-2) als ein Ausschnitt einer Parabolrinne geformt sind oder die Form der konkav gekrümmten Hohlspiegel (105, 105-1, 105-2) einem Ausschnitt einer Kreisrinne entspricht, die dem Ausschnitt einer Parabolrinne angenähert ist.

5. Vorrichtung (100) nach einem der vorangehenden Ansprüche, wobei das Objekt (107) gegenüber der Lichtquelle (101) und/oder der Erfassungseinrichtung (109) verlagerbar ist, insbesondere rotierbar und/oder verschiebbar ist, um das Höhenprofil der dreidimensionalen Oberfläche des Objekts (107) zu bestimmen, oder wobei die Lichtquelle (101) und/oder der Erfassungseinrichtung (109) gegenüber dem Objekt (107) verlagerbar ist, insbesondere rotierbar und/oder verschiebbar ist, um das Höhenprofil der dreidimensionalen Oberfläche des Objekts (107) zu bestimmen

6. Vorrichtung (100) nach einem der vorangehenden Ansprüche, wobei die Lichtquelle (101) einen Linienlaser umfasst, welcher ausgebildet ist, divergentes Laserlicht zu emittieren, insbesondere eine Laserlinie auf die dreidimensionale Oberfläche des Objekts (107) zu projizieren.

7. Vorrichtung (100) nach Anspruch 6, wobei die Erfassungseinrichtung (109) eingerichtet ist, ein versetztes / verformtes Laserlichtmuster, insbesondere eine verformte Laserlinie, welche von dem der dreidimensionalen Oberfläche des Objekts (107) reflektiert wird, zu erfassen.

8. Vorrichtung (100) nach Anspruch 7, wobei die Auswerteeinrichtung eingerichtet ist, das Höhenprofil der dreidimensionalen Oberfläche des Objekts (107) aus der Abweichung der verformten Laserlinie von einer Nulllage zu bestimmen.

9. Vorrichtung (100) nach Anspruch 7, wobei die Auswerteeinrichtung eingerichtet ist, den Versatz oder die Verformung der Laserlinie bzw. des Laserlichtmusters anhand unterschiedlicher Helligkeitswerte einzelner Pixel des zweidimensionalen Matrix-Chips der Triangulationskamera auszuwerten.

10. Vorrichtung (100) nach Anspruch 1, wobei ein Messbereich und / oder eine Messauflösung durch den Triangulationswinkel zwischen der optischen Achse der Optik der Erfassungseinrichtung (109) und der Ebene, der von der Oberfläche des Objekts (107) reflektieren Lichts (103-3) bestimmbar ist.

11. Verfahren (200) zum Bestimmen eines Höhenprofils einer dreidimensionalen Oberfläche eines Objekts (107), umfassend die folgenden Verfahrensschritte:
- Bereitstellen (202) eines Objekts (107), insbesondere einer Möbelplatte mit Vertiefungen mit einer dreidimensionalen Oberfläche;
- Emittierung divergenter Lichtstrahlen von einer Lichtquelle (101);
- Wandlung des von der Lichtquelle (101) emittierte divergente Lichtes (103-1) in Licht (103-2) mit parallelen Lichtstrahlen durch einen ersten Hohlspiegel (105, 105-1), um dieses in Richtung der dreidimensionalen Oberfläche des Objekts (107) zu reflektieren;
- Wandlung des von der dreidimensionalen Oberfläche des Objekts (107) reflektierten Lichtes (103-3) in Licht mit konvergenten Lichtstrahlen (103-4) und Fokussierung der konvergenten Lichtstrahlen (103-4) auf eine Erfassungseinrichtung (109) durch einen zweiten Hohlspiegel (105, 105-2);
- Erfassung eines versetzten / verformten Lichtmuster (111) von einer Erfassungseinrichtung (109), wobei die Erfassungseinrichtung (109) als eine Triangulationskamera mit einem zweidimensionalen Matrix-Chip mit einer Vielzahl von Pixeln ausgebildet ist;
- Bestimmung eines Höhenprofils der dreidimensionalen Oberfläche des Objekts (107) auf Basis des durch die Erfassungseinrichtung (109) erfassten versetzten Lichtmusters (111) oder der erfassten Verformung einzelner Bereiche des Lichtmusters (111).

12. Verfahren (200) nach Anspruch 11, wobei die Lichtquelle (101) ein Linienlaser umfasst, der divergentes Laserlicht emittiert, insbesondere eine Laserlinie auf die dreidimensionale Oberfläche des Objekts (107) projiziert.

13. Verfahren (200) nach Anspruch 12, wobei die Erfassungseinrichtung (109) ein versetztes / verformtes Laserlichtmuster, insbesondere eine verformte Laserlinie, welche von der dreidimensionalen Oberfläche des Objekts (107) reflektiert wird, erfasst.

14. Verfahren (200) nach einem der Ansprüche 12 oder 13, wobei die Auswerteeinrichtung den Versatz oder die Verformung der Laserlinie bzw. des Laserlichtmusters anhand unterschiedlicher Helligkeitswerte einzelner Pixel des zweidimensionalen Matrix-Chips der Triangulationskamera auswertet.

## Claims

1. A device (100) for determining an elevation profile of a three-dimensional surface of an object (107), comprising:
a light source (101), which is designed to emit diverging light beams (103-1),
a first concave mirror (105, 105-1), which is designed to convert the diverging light (103-1) emitted from the light source (101) into light (103-2) with parallel light beams and reflect it in the direction of the three-dimensional surface of the object (107),
a second concave mirror (105, 105-2), which is designed to convert the light (103-3) reflected by the three-dimensional surface of the object (107) into light with converging light beams (103-4) and to focus the converging light (103-4) onto a detection means (109),
wherein the detection means (109) is designed to detect the light (103-3) reflected by the three-dimensional surface of the object (107) as an offset/deformed light pattern (111), wherein the offset of the offset light pattern correlates with the elevation profile of the three-dimensional surface of the object (107), and
an evaluation means, which is designed to determine an elevation profile of the three-dimensional surface of the object (107) on the basis of the offset light pattern (111) detected by the detection means (109),
wherein the detection means (109) comprises a triangulation camera with a two-dimensional matrix chip with a number of pixels, wherein the triangulation camera is designed to detect the deformation (115) of the light pattern (111),
wherein the evaluation means is designed to determine an elevation profile, in particular a two-dimensional elevation profile, of the surface of the object (107) on the basis of the detected offset/detected deformation of individual regions of the light pattern (111).

2. The device (100) according to claim 1, wherein the concave mirror (105, 105-1, 105-2) is a concavely curved concave mirror (105, 105-1, 105-2).

3. The device (100) according to claim 2, wherein the curved upper face (105-3) of the concavely curved concave mirror (105, 105-1, 105-2) is a section of a paraboloid of revolution or is in the shape of a paraboloid of revolution of the curved upper face (105-3) of the concavely curved concave mirror (105, 105-1, 105-2) is approximated by a section of a spherical segment.

4. The device (100) according to claim 2, wherein the curved upper face (105-3) of the concavely curved concave mirror (105, 105-1, 105-2) is a section of a parabolic trough or the shape of the concavely curved concave mirror (105, 105-1, 105-2) corresponds with a section of a circular trough that is approximated to the section of a parabolic trough.

5. The device (100) according to one of the preceding claims, wherein the object (107) can be moved, in particular rotated and/or slid, relative to the light source (101) and/or the detection means (109) in order to determine the elevation profile of the three-dimensional surface of the object (107), or wherein the light source (101) and/or the detection means (109) can be moved, in particular rotated and/or slid, relative to the object (107) in order to determine the elevation profile of the three-dimensional surface of the object (107).

6. The device (100) according to one of the preceding claims, wherein the light source (101) comprises a line laser, which is designed to emit diverging laser light, in particular project a laser line onto the three-dimensional surface of the object (107).

7. The device (100) according to claim 6, wherein the detection means (109) is designed to detect an offset/deformed laser light pattern, in particular a deformed laser line which is reflected by the three-dimensional surface of the object (107).

8. The device (100) according to claim 7, wherein the evaluation means is designed to determine the elevation profile of the three-dimensional surface of the object (107) from the deviation of the deformed laser line from a zero position.

9. The device (100) according to claim 7, wherein the evaluation means is designed to evaluate the offset or deformation of the laser line or of the laser line pattern on the basis of different brightness values of individual pixels of the two-dimensional matrix chip of the triangulation camera.

10. The device (100) according to claim 1, wherein a measuring range and/or a measuring resolution can be determined by the triangulation angle between the optical axis of the optics of the detection means (109) and of the plane, which angle can be determined from the light (103-3) reflected by the surface of the object (107).

11. A method (200) for determining an elevation profile of a three-dimensional surface of an object (107), comprising the following method steps:
- providing (202) an object (107), in particular a furniture panel with recesses with a three-dimensional surface;
- emitting diverging light beams from a light source (101);
- converting the diverging light (103-1) emitted by the light source (101) into light (103-2) with parallel light beams by means of a first concave mirror (105, 105-1) in order to reflect said light in the direction of the three-dimensional surface of the object (107);
- converting the light (103-3) reflected by the three-dimensional surface of the object (107) into light with converging light beams (103-4) and focusing the converging light beams (103-4) onto a detection means (109) by means of a second concave mirror (105, 105-2);
- detecting an offset/deformed light pattern (111) by means of a detection means (109), wherein the detection means (109) is a triangulation camera with a two-dimensional matrix chip with a number of pixels.
- determining an elevation profile of the three-dimensional surface of the object (107) on the basis of the offset light pattern (111) detected by the detection means (109) or the detected deformation of individual regions of the light pattern (111).

12. The method (200) according to claim 11, wherein the light source (101) comprises a line laser which emits diverging laser light, in particular projects a laser line onto a three-dimensional surface of the object (107).

13. The method (200) according to claim 12, wherein the detection means (109) detects an offset/deformed laser light pattern, in particular a deformed laser line which is reflected by the three-dimensional surface of the object (107).

14. The method (200) according to one of claims 12 or 13, wherein the evaluation means evaluates the offset or the deformation of the laser line or the laser light pattern on the basis of different brightness values of individual pixels of the two-dimensional matrix chip of the triangulation camera.

## Revendications

1. Dispositif (100) permettant de déterminer un profil de hauteur d'une surface tridimensionnelle d'un objet (107), comprenant :
une source de lumière (101), qui est conçue pour émettre des rayons lumineux divergents (103-1),
un premier miroir concave (105, 105-1) qui est conçu pour convertir la lumière divergente (103-1) émise par la source de lumière (101) en lumière (103-2) avec des rayons lumineux parallèles et pour la réfléchir en direction de la surface tridimensionnelle de l'objet (107),
un second miroir concave (105, 105-2) qui est conçu pour convertir la lumière (103-3) réfléchie par la surface tridimensionnelle de l'objet (107) en lumière avec des rayons lumineux convergents (103-4) et pour focaliser les rayons lumineux convergents (103-4) sur un dispositif de détection (109),
le dispositif de détection (109) étant conçu pour détecter la lumière (103-3) réfléchie par la surface tridimensionnelle de l'objet (107) sous la forme d'un motif de lumière décalé / déformé (111), le décalage du motif de lumière décalé étant en corrélation avec le profil de hauteur de la surface tridimensionnelle de l'objet (107), et
un dispositif d'évaluation étant conçu pour déterminer un profil de hauteur de la surface tridimensionnelle de l'objet (107) sur la base du motif de lumière décalé (111) détecté par le dispositif de détection (109),
le dispositif de détection (109) comprenant une caméra à triangulation avec une puce matricielle bidimensionnelle ayant une pluralité de pixels, la caméra à triangulation étant conçue pour détecter la déformation (115) du motif de lumière (111),
le dispositif d'évaluation étant conçu pour déterminer un profil de hauteur, en particulier un profil de hauteur bidimensionnel, de la surface tridimensionnelle de l'objet (107) sur la base du décalage / de la déformation détecté(e) de différentes zones du motif de lumière (111).

2. Dispositif (100) selon la revendication 1, les miroirs concaves (105, 105-1, 105-2) se présentant sous la forme de miroirs incurvés concaves (105, 105-1, 105-2).

3. Dispositif (100) selon la revendication 2, la surface supérieure incurvée (105-3) des miroirs incurvés concaves (105, 105-1, 105-2) se présentant sous la forme d'une section d'un paraboloïde de révolution ou sous une forme parabolique de révolution de la surface supérieure incurvée (105-3) des miroirs incurvés concaves (105, 105-1, 105-2) étant approchée par une section d'un segment de sphère.

4. Dispositif (100) selon la revendication 2, la surface supérieure incurvée (105-3) des miroirs incurvés concaves (105, 105-1, 105-2) se présentant sous la forme d'une section d'une rainure parabolique ou sous la forme des miroirs incurvés concaves (105, 105-1, 105-2) correspondant à une section d'une rainure circulaire qui est approchée de la section d'une rainure parabolique.

5. Dispositif (100) selon l'une des revendications précédentes, l'objet (107) pouvant être déplacé par rapport à la source de lumière (101) et/ou au dispositif de détection (109), en particulier pouvant être mis en rotation et/ou déplacé, afin de déterminer le profil de hauteur de la surface tridimensionnelle de l'objet (107), ou la source de lumière (101) et/ou le dispositif de détection (109) pouvant être déplacé par rapport à l'objet (107), en particulier pouvant être mis en rotation et/ou déplacé, afin de déterminer le profil de hauteur de la surface tridimensionnelle de l'objet (107)

6. Dispositif (100) selon l'une des revendications précédentes, la source de lumière (101) comprenant un laser linéaire conçu pour émettre une lumière laser divergente, notamment pour projeter une ligne laser sur la surface tridimensionnelle de l'objet (107).

7. Dispositif (100) selon la revendication 6, le dispositif de détection (109) étant conçu pour détecter un motif de lumière laser décalé / déformé, en particulier une ligne laser déformée, qui est réfléchie par la surface tridimensionnelle de l'objet (107).

8. Dispositif (100) selon la revendication 7, le dispositif d'évaluation étant conçu pour déterminer le profil de hauteur de la surface tridimensionnelle de l'objet (107) à partir de l'écart de la ligne laser déformée par rapport à une position zéro.

9. Dispositif (100) selon la revendication 7, le dispositif d'évaluation étant conçu pour évaluer le décalage ou la déformation de la ligne laser ou du motif de lumière laser à l'aide de différentes valeurs de luminosité de différents pixels de la puce matricielle bidimensionnelle de la caméra à triangulation.

10. Dispositif (100) selon la revendication 1, une plage de mesure et/ou une résolution de mesure peuvent être déterminés par l'angle de triangulation entre l'axe optique de l'optique du dispositif de détection (109) et le plan de la lumière (103-3) réfléchie par la surface de l'objet (107).

11. Procédé (200) permettant de déterminer un profil de hauteur d'une surface tridimensionnelle d'un objet (107), comprenant les étapes de procédé suivantes consistant à :
- fournir (202) un objet (107), en particulier un panneau de meuble avec des creux ayant une surface tridimensionnelle ;
- émettre des rayons lumineux divergents d'une source de lumière (101) ;
- convertir la lumière divergente (103-1) émise par la source de lumière (101) en lumière (103-2) avec des rayons lumineux parallèles par un premier miroir concave (105, 105-1) pour la réfléchir en direction de la surface tridimensionnelle de l'objet (107) ;
- convertir la lumière (103-3) réfléchie par la surface tridimensionnelle de l'objet (107) en lumière avec des rayons lumineux convergents (103-4) et focaliser les rayons lumineux convergents (103-4) sur un dispositif de détection (109) par un second miroir concave (105, 105-2) ;
- détecter un motif de lumière décalé / déformé (111) par un dispositif de détection (109), le dispositif de détection (109) étant conçu sous la forme d'une caméra à triangulation avec une puce matricielle bidimensionnelle ayant une pluralité de pixels ;
- déterminer un profil de hauteur de la surface tridimensionnelle de l'objet (107) sur la base du motif de lumière décalé (111) détecté par le dispositif de détection (109) ou de la déformation détectée de différentes zones du motif de lumière (111).

12. Procédé (200) selon la revendication 11, la source de lumière (101) comprenant un laser linéaire, qui émet la lumière laser divergente, en particulier projette une ligne laser sur la surface tridimensionnelle de l'objet (107).

13. Procédé (200) selon la revendication 12, le dispositif de détection (109) détectant un motif de lumière laser décalé / déformé, en particulier une ligne laser déformée, qui est réfléchie par la surface tridimensionnelle de l'objet (107).

14. Procédé (200) selon l'une des revendications 12 ou 13, le dispositif d'évaluation évaluant le décalage ou la déformation de la ligne laser ou du motif de lumière laser à l'aide de différentes valeurs de luminosité de différents pixels de la puce matricielle bidimensionnelle de la caméra à triangulation.
